# EUROPÄISCHE PATENTANMELDUNG

(11) **EP 4 763 691 A1**
(43) Veröffentlichungstag der Anmeldung: **24.06.2026**
(21) Anmeldenummer: 25214527.1
(22) Anmeldetag: 10.11.2025
(51) Int. Cl.: B64C 1/14

(54) **SCHUTZVORRICHTUNG FÜR FLUGZEUGFENSTEREINHEITEN, SCHUTZVORRICHTUNGSSYSTEM FÜR FLUGZEUGE, FLUGZEUG**

(30) Priorität: 17.12.2024 DE 102024138279
(71) Anmelder: Airbus Operations GmbH, 21129 Hamburg (DE)
(72) Erfinder: WERTHMANN, Vitalij, 21129 Hamburg (DE)
(74) Vertreter: Isarpatent

(57) **Zusammenfassung**

Die vorliegende Erfindung betrifft eine Schutzvorrichtung (1) für Flugzeugfenstereinheiten. Solch eine Schutzvorrichtung (1) umfasst dabei eine Rahmeneinheit (7), eine in der Rahmeneinheit (7) angeordnete mehrteilige und verschließbare Schutzeinheit (9), wenigstens eine an der Schutzeinheit (9) angeordnete und vorspannbare Bewegungseinheit (12), welche ausgelegt ist, die Schutzeinheit (9) von wenigstens einem offenen Positionszustand in einen verschlossenen Positionszustand zu überführen, und eine über wenigstens einen Kopplungsbereich (13) der wenigstens einen Bewegungseinheit (12) mit der wenigstens einen Bewegungseinheit (12) gekoppelten Auslöseeinheit (8). Die Auslöseeinheit (8) ist dabei in einem eingebauten Zustand der Schutzvorrichtung (1) in einer Flugzeugfenstereinheit zwischen einer Außenfenstereinheit (2) der Flugzeugfenstereinheit und der Rahmeneinheit (7) angeordnet, sodass auf die Außenfenstereinheit (2) einwirkende mechanische Kräfte auf die Auslöseeinheit (8) zum Zwecke eines Auslösevorgangs an der wenigstens einen Bewegungseinheit (12) übertragbar sind. Zudem wird ein Schutzvorrichtungssystem (21) für Flugzeuge und ein erfindungsgemäßes Flugzeug (100) vorgestellt.

## Beschreibung

### TECHNISCHES GEBIET DER ERFINDUNG

Die vorliegende Erfindung betrifft eine Schutzvorrichtung für Flugzeugfenstereinheiten, ein Schutzvorrichtungssystem für Flugzeuge sowie ein Flugzeug.

### TECHNISCHER HINTERGRUND

Flugzeuge weisen im Allgemeinen eine sehr robuste Außenhaut auf, welche einen Innenraum des Flugzeugs vor verschiedensten extern auf das Flugzeug einwirkenden Einflüssen schützt. Insbesondere Bereiche, welche Menschen oder Fracht während eines Flugeinsatzes aufnehmen, sind dabei besonders im Fokus. Es gilt, diese Bereiche vor jeglichen äußeren Einflüssen so zu schützen, sodass jederzeit und oder jeglichen Umständen unerwünschte externe Einflüsse zuverlässig ausgeschlossen werden können. Diese Bereiche sind überwiegend im Flugzeugrumpf verortet, sodass auch die dort jeweils positionierten Flugzeugfenstereinheiten entsprechend robust und sicher vorgesehen sein müssen.

Im Gegensatz zum Rest des Flugzeugrumpfs, welcher häufig überwiegend beispielsweise aus Aluminium hergestellt ist, stellen die Flugzeugfenstereinheiten im Flugzeug potenzielle Schwachstellen dar, da diese weniger robuste Materialien im Vergleich zu Metall aufweisen können. So kann es insbesondere in sensiblen Bereichen, welche externen Einflüssen möglicherweise besonders ausgesetzt sind, nötig erscheinen, vereinzelnd auf Flugzeugfenstereinheiten zu verzichten und stattdessen einen geschlossenen Bereich im Flugzeugrumpf vorzusehen.

Dies kann möglicherweise als Nachteil angesehen werden, da somit an dieser Stelle weder das Bordpersonal noch die Fluggäste eine gewünschte Aussicht nach draußen haben. Insbesondere für Routinechecks kann diese Aussicht nach draußen für das Bordpersonal an möglichst vielen Stellen im Flugzeug hilfreich sein, um sich stets einen zusätzlichen Überblick über externe Vorgänge außerhalb des Flugzeugs machen zu können. Aber auch für ein ausreichendes Wohlbefinden der Fluggäste kann eine Aussicht nach draußen in jeder Sitzreihe hilfreich sein.

Für Flugzeuge mit Propellereinheiten sind bereits verstärkte Rumpfkonstruktionen in den benachbarten Bereichen der Propellerantriebe bekannt, um an dieser Stelle ein besonderes Maß an Sicherheit vorzusehen. Allerdings konterkariert dieses Mehrmaterial an dieser Stelle ein allgemeines Bestreben, Flugzeuge möglichst leicht zu bauen. Zudem können derartige Verstärkungselemente rund um Flugzeugfenstereinheiten nur bedingt die eigentlich sensiblen Fensterflächen schützen.

In diesem Zusammenhang sind deswegen auch bereits Flugzeugfenstereinheiten mit eingesetzten Drahtgeflechten bekannt, wobei diese bei unerwünschten stärkeren externen Einflüssen ggf. auch nur sehr begrenzt einen adäquaten Schutz bieten. Je nach Konstruktion des Flugzeugs verbleibt in Sonderfällen letztendlich nur, an diesen zur Propellereinheit ausgerichteten Bereichen entsprechende Flugzeugfenstereinheiten stark zu verkleinern oder gänzlich wegzulassen.

Aktuell ist es schwierig, geeignete durchsichtige Materialien auf dem Markt zu finden, welche zum einen eine für die angesprochenen Szenarien eine zusätzliche Sicherheit, über ihre eigene Schutzwirkung hinaus, bieten würden und gleichzeitig eine leichte und möglichst schlanke Konstruktion für einen Einsatz im Flugzeugrumpf ermöglichen.

### ZUSAMMENFASSUNG DER ERFINDUNG

Vor diesem Hintergrund ist es ein Ziel der vorliegenden Erfindung, eine Schutzvorrichtung für Flugzeugfenstereinheiten, ein Schutzvorrichtungssystem für Flugzeuge sowie ein Flugzeug bereitzustellen, welche zumindest teilweise die zuvor genannten Nachteile überkommen.

Diese Aufgabe wird durch eine Schutzvorrichtung für Flugzeugfenstereinheiten mit den Merkmalen des Anspruchs 1 und einem Schutzvorrichtungssystem für Flugzeuge mit den Merkmalen des Anspruchs 8 sowie durch ein Flugzeug mit den Merkmalen des Anspruchs 10 gelöst.

Gemäß der Erfindung ist eine Schutzvorrichtung für Flugzeugfenstereinheiten vorgesehen, welche eine Rahmeneinheit, eine in der Rahmeneinheit angeordnete mehrteilige und verschließbare Schutzeinheit, wenigstens eine an der Schutzeinheit angeordnete und vorspannbare Bewegungseinheit, welche ausgelegt ist, die Schutzeinheit von wenigstens einem offenen Positionszustand in einen verschlossenen Positionszustand zu überführen, und eine über wenigstens einen Kopplungsbereich der wenigstens einen Bewegungseinheit mit der wenigstens einen Bewegungseinheit gekoppelte Auslöseeinheit umfasst. Die Auslöseeinheit ist dabei in einem eingebauten Zustand der Schutzvorrichtung in einer Flugzeugfenstereinheit zwischen einer Außenfenstereinheit der Flugzeugfenstereinheit und der Rahmeneinheit angeordnet, sodass auf die Außenfenstereinheit einwirkende mechanische Kräfte auf die Auslöseeinheit zum Zwecke eines Auslösevorgangs an der wenigstens einen Bewegungseinheit übertragbar sind.

Weiterhin ist gemäß der Erfindung ein Schutzvorrichtungssystem für Flugzeuge vorgesehen, welches wenigstens zwei erfindungsgemäße Schutzvorrichtungen und eine mit diesen wenigstens zwei Schutzvorrichtungen gekoppelte Steuerungseinheit mit Steuerungsprogramm umfasst. Die Steuerungseinheit mit Steuerungsprogramm ist dabei ausgelegt, jeweilige Auslösevorgänge an den wenigstens zwei Schutzvorrichtungen zu detektieren und im Wesentlichen gleichzeitig einen Auslösevorgang an der jeweils wenigstens einen weiteren Schutzvorrichtung zu bewirken.

Weiterhin ist gemäß der Erfindung ein Flugzeug vorgesehen, welches wenigstens eine erfindungsgemäße Schutzvorrichtung oder ein erfindungsgemäßes Schutzvorrichtungssystem umfasst.

Eine Idee der vorliegenden Erfindung ist es daher, eine Schutzvorrichtung für Flugzeugfenstereinheiten bereitzustellen, welche mit Vorteil an Flugzeugfenstereinheiten zum Schutze vor besonderen externen Einflüssen angeordnet werden kann. Im Falle eines heftigen Schlags auf die Flugzeugfenstereinheit, an welcher solch eine Schutzvorrichtung installiert ist, kann mittels eines Auslösemechanismus sehr schnell eine geschlossener Zustand der Schutzvorrichtung bewirkt werden, sodass ein dahinter liegender Innenraum in kürzester Zeit zusätzlich besonders geschützt werden kann.

Ein besonderer Vorteil besteht somit darin, dass, bevor ein Auslösevorgang einen geschlossenen Positionszustand bewirkt, verschiedene offene Positionszustände der Schutzvorrichtung möglich sind, sodass eine weitestgehend freie Sicht nach draußen durch die Schutzvorrichtung und die Flugzeugfenstereinheit möglich ist.

Die mehrteilige Schutzvorrichtung wirkt dabei bei jeglichen Personen, die in den verschiedenen offenen Positionszuständen durchschauen wollen, vertraut, da ähnliche sich ergebende partielle Sichtweisen aus anderen Lebensbereichen bereits bekannt sind. Solche anderen Lebensbereiche können beispielsweise jegliche Fenstereinheiten mit Jalousievorrichtungen oder dergleichen sein.

Da die erfindungsgemäße Schutzvorrichtung im geschlossenen Positionszustand einen sehr zuverlässigen und für die oben beschriebenen Zwecke ausreichenden zusätzlichen Schutz bietet, kann an den jeweiligen Einbauflächen der Flugzeugfenstereinheiten, welche eine erfindungsgemäße Schutzvorrichtung umfassen, auf Verstärkungsmaterial verzichtet werden, sodass insgesamt eine leichtere Flugzeugkonstruktion bereitstellbar ist, welche über zusätzliche Sicherheitsvorkehrungen verfügt, um eine bereits vorhandene Sicherheit auf vorteilhafte Weise zu erweitern.

Die zuvor genannten Vorteile gelten, soweit übertragbar, auch für das vorgestellte erfindungsgemäße Schutzvorrichtungssystem für Flugzeuge und für das vorgestellte erfindungsgemäße Flugzeug.

Gemäß einer weiteren Ausführungsform der Erfindung ist vorgesehen, dass die Schutzeinheit wenigstens zwei beweglich in der Rahmeneinheit gelagerte Lamellenelemente mit jeweiligen Rotationsachsen umfasst.

Lamellenelemente bieten unter anderem den Vorteil, dass sie in geöffneten Positionszuständen einen gute Durchsicht ermöglichen, und in geschlossenen Positionen einen robusten Schutz bieten, da sie zusammen eine geschlossene Gesamtfläche bilden.

Gemäß einer weiteren Ausführungsform der Erfindung ist vorgesehen, dass die wenigstens eine Bewegungseinheit wenigstens eine in dem wenigstens einen Kopplungsbereich angeordnete Federelementbaugruppe mit Spannhalteelement umfasst.

Auf diese Weise kann die wenigstens eine Bewegungseinheit in einem vorgespannten Zustand besonders effektiv mittels des Spannhaltelements bereitgestellt werden, wobei im Falle eines Auslöseszenarios dann die Auslöseeinheit in dem wenigstens einen Kopplungsbereich entsprechend das Spannhalteelement auslösen kann, sodass die wenigstens eine Bewegungseinheit den geschlossenen Zustand der Schutzeinheit bewirken kann. Dies kann je nach gewählter Federelementbaugruppe besonders schnell bewirkbar sein, wobei jegliche Verschließzeiten im Bereich von 0,001 bis 0,005 Sekunden als besonders vorteilhaft anzusehen sind.

Gemäß einer weiteren Ausführungsform der Erfindung ist vorgesehen, dass die wenigstens eine Bewegungseinheit wenigstens eine erste Übertragungseinheit umfasst, sodass die wenigstens zwei Lamellenelemente gleichzeitig und parallel zueinander mittels der wenigstens einen Bewegungseinheit und der wenigstens einen ersten Übertragungseinheit bewegbar sind.

Über wenigstens einen Kopplungsbereich kann somit die wenigstens eine Bewegungseinheit durch die Auslöseeinheit bewegt werden, wobei aufgrund der vorgesehenen ersten Übertragungseinheit jegliche vorgesehenen Lamellenelemente gleichzeitig und parallel zueinander von verschiedensten offenen Positionszuständen hin zu einem geschlossenen Positionszustand überführt werden können. Dies bietet den Vorteil, dass zu Schutzzwecken in kürzester Zeit eine möglichst geschlossene, mittels der Lamellenelemente hergestellte, Fläche im Bereich der Flugzeugfenstereinheit, an welcher die erfindungsgemäße Schutzvorrichtung angeordnet ist, bereitstellbar ist.

Gemäß einer weiteren Ausführungsform der Erfindung ist vorgesehen, dass die Auslöseeinheit über wenigstens zwei Kopplungsbereiche der wenigstens einen Bewegungseinheit mit der wenigstens einen Bewegungseinheit gekoppelt ist und die Auslöseeinheit wenigstens eine zweite Übertragungseinheit umfasst, sodass ein Auslösevorgang an der wenigstens einen Bewegungseinheit an einem ersten Kopplungsbereich mittels der Auslöseeinheit und der wenigstens einen zweiten Übertragungseinheit im Wesentlichen gleichzeitig auch an wenigstens einem weiteren Kopplungsbereich bewirkbar ist.

Eine schnelle und zuverlässige Vorgehensweise während eines Auslöseszenarios kann somit noch besser erreicht werden, da jegliche vorhandene Kopplungsbereiche, welche eine von außen einwirkende Kraft detektieren, nahezu in Echtzeit mittels der zweiten Übertragungseinheit diese Informationen an weitere Kopplungsbereiche weiterleiten können. Im Falle von vorgespannten Federelementbaugruppen können somit sämtliche vorgespannten Federkräfte nahezu gleichzeitig genutzt werden, um eine besonders schnelle Schließzeit der Schutzeinheit zu bewirken.

Gemäß einer weiteren Ausführungsform der Erfindung ist vorgesehen, dass die Schutzvorrichtung wenigstens zwei erste Übertragungseinheiten und wenigstens zwei zweite Übertragungseinheiten umfasst, wobei jeweilige Rotationsachsen der wenigstens zwei Lamellenelemente an ihren jeweiligen Enden sowohl mit einer ersten als auch mit einer zweiten Übertragungseinheit gekoppelt sind, sodass ein Auslösevorgang an der wenigstens einen Bewegungseinheit auf einer ersten Seite der jeweiligen Rotationsachsen im Wesentlichen gleichzeitig auch auf einer zweiten Seite der jeweiligen Rotationsachsen bewirkbar ist.

Im Falle von vorgespannten Federelementbaugruppen auf jeweiligen Seitenbereichen der Rotationsachsen können somit sämtliche vorgespannten Federkräfte nahezu gleichzeitig genutzt werden, um eine besonders schnelle Schließzeit der Schutzeinheit zu bewirken.

Gemäß einer weiteren Ausführungsform der Erfindung ist vorgesehen, dass die wenigstens zwei Lamellenelemente ausgewählt sind aus: Lamellenelemente aus Metall, Lamellenelemente aus Aluminium, Lamellenelemente aus Metall mit einer Dicke zwischen 10 und 20 mm, vorzugsweise mit einer Dicke von 14 mm, Lamellenelemente aus Aluminium mit einer Dicke zwischen 10 und 20 mm, vorzugsweise mit einer Dicke von 14 mm.

Auf diese Weise kann eine ausreichende Schutzwirkung bereitgestellt werden, ohne dass dabei der Gedanke einer Leichtbauweise der Flugzeugkonstruktion außer Acht gelassen werden würde.

Es kann sich zudem bei dem Begriff "*Dicke*" jeweils um eine mittlere Dicke der Lamellenelemente handeln. Mit anderen Worten schließen die genannten Dicken in den jeweiligen Varianten der zuvor genannten Lamellenelementen nicht aus, dass diese gesonderte geometrische Formen aufweisen, insbesondere in den jeweiligen Randbereichen der Lamellenelementen.

Gemäß einer weiteren Ausführungsform des erfindungsgemäßen Systems ist vorgesehen, dass der weitere Auslösevorgang in Abhängigkeit einer benutzerdefinierten räumlichen Nähe der wenigstens zwei Schutzvorrichtungen zueinander bewirkbar ist.

Auch ohne eine detektierte äußere Krafteinwirkung können in temporär gefährdeten Bereichen somit besonders geschützte Positionen der Schutzvorrichtungen bewirkt werden, sodass insgesamt eine bereits vorhandene Sicherheit noch weiter verbessert werden kann. Insbesondere an direkt benachbarten Flugzeugfenstereinheiten, an welchen das erfindungsgemäße System angeordnet ist, kann somit ein weiträumiger Schutz bereitgestellt werden, wenn sich dies aufgrund von bestimmten Vorgängen als sinnvoll erweisen sollte.0

### KURZE ZUSAMMENFASSUNG DER ZEICHNUNGEN

Nachfolgend wird die vorliegende Erfindung anhand der in den schematischen Figuren dargestellten Ausführungsbeispielen näher erläutert:
- Fig. 1: zeigt eine schematische Explosionsansicht einer Schutzvorrichtung für Flugzeugfenstereinheiten;
- Fig. 2: zeigt eine schematische Perspektivansicht einer Schutzvorrichtung für Flugzeugfenstereinheiten;
- Fig. 3: zeigt eine schematische Draufsicht auf eine Schutzvorrichtung für Flugzeugfenstereinheiten;
- Fig. 4: zeigt eine schematische Seitenansicht einer Schutzvorrichtung für Flugzeugfenstereinheiten;
- Fig. 5: zeigt eine schematische Ansicht eines Schutzvorrichtungssystems für Flugzeuge;
- Fig. 6: zeigt eine schematische Ansicht eines erfindungsgemäßen Flugzeugs.

In den Figuren der Zeichnung sind gleiche, funktionsgleiche und gleichwirkende Elemente, Merkmale und Komponenten jeweils mit denselben Bezugszeichen versehen, sofern nichts anderes angegeben ist.

### BESCHREIBUNG BEISPIELHAFTER AUSFÜHRUNGSFORMEN

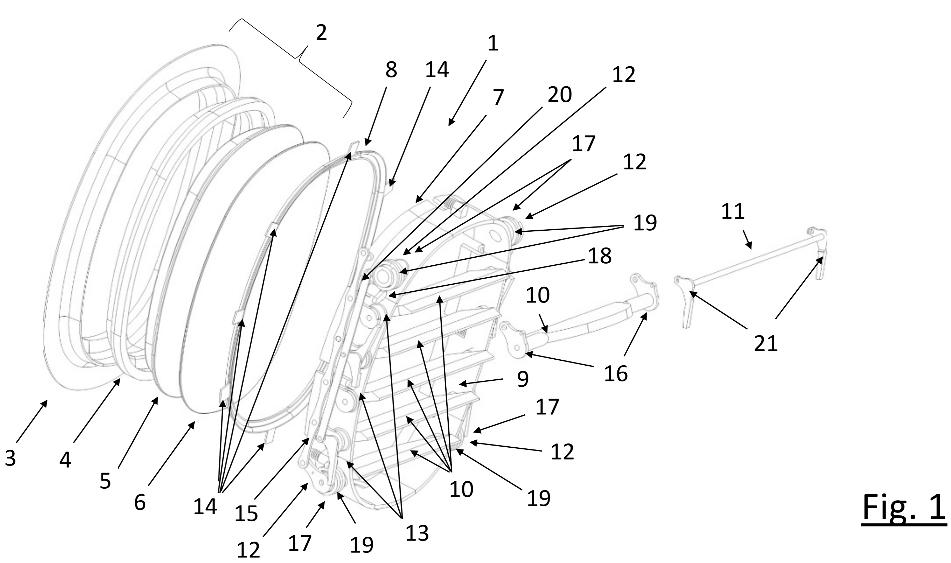

Fig. 1 zeigt eine schematische Explosionsansicht einer Schutzvorrichtung 1 für Flugzeugfenstereinheiten. Die Schutzvorrichtung 1 ist dabei vor einer Außenfenstereinheit 2 von einer nicht vollständig gezeigten Flugzeugfenstereinheit positioniert dargestellt.

Die dargestellte Außenfenstereinheit 2 besteht dabei aus einem Fensterrahmen 3, einem Dichtelement 4, einer Außenscheibe 5 und einer Innenscheibe 6. Diese Au-ßenfenstereinheit 2 ist lediglich beispielhaft dargestellt. In nicht näher dargestellten Ausführungsformen ist vorstellbar, dass die erfindungsgemäße Schutzvorrichtung 1 auch für auf andere Art und Weise vorgesehene Außenfenstereinheiten 2 von Flugzeugfenstereinheiten vorgesehen sein kann. So ist vorstellbar, dass etwa nur eine besonders ausgebildete Außenscheibe 5 vorgesehen ist oder zusätzliche Innenscheiben 6 vorgesehen sind.

Eine vollständige Flugzeugfenstereinheit kann beispielsweise noch weitere Elemente umfassen, welche eine Verortung der Schutzvorrichtung 1 in einem Kabineninnenbereich eines Flugzeugs ermöglicht, sodass in Richtung von Fluggästen sich ein entsprechend gewohntes Gesamtbild ergibt. Insbesondere ist vorstellbar, dass solch eine vollständige Flugzeugfenstereinheit die erfindungsgemäße Schutzvorrichtung 1 derart aufnehmen kann, sodass sie im Wesentlichen von außen von Fluggästen oder anderen Personen nicht fassbar oder berührbar angeordnet vorgesehen ist. Beispielsweise kann eine weitere Innenscheibe 6 vorgesehen sein, sodass die erfindungsgemäße Schutzvorrichtung 1 etwa von wenigstens zwei Innenscheiben 6 umfasst wird und somit von außen nicht manipulierbar vorgehalten wird, sodass nur die vorgesehenen Auslöseszenarien den erfindungsgemäßen Mechanismus bewirken können.

Von der Schutzvorrichtung 1 für Flugzeugfenstereinheiten ist weiterhin eine Rahmeneinheit 7 dargestellt. Zwischen der Rahmeneinheit 7 und der Außenfenstereinheit 2 ist zudem eine Auslöseeinheit 8 von der Schutzvorrichtung 1 dargestellt. Dabei ist die Auslöseeinheit 8 im Wesentlichen ringförmig vorgesehen, wobei eine Außenkontur der Auslöseeinheit 8 einem äußeren Umfang der Innenscheibe 6 entspricht, sodass diese Auslöseeinheit 8 passgenau zwischen der Außenfenstereinheit 2 und der Rahmeneinheit 7 vorgesehen werden kann, ohne dass dabei ein Sichtbereich durch die Rahmeneinheit 7 und die Außenfenstereinheit 2 von ihr gestört wird.

In der Rahmeneinheit 7 ist zudem eine mehrteilige und verschließbare Schutzeinheit 9 angeordnet dargestellt, wobei die Schutzeinheit 9 in diesem Ausführungsbeispiel insgesamt sechs Lamellenelemente 10 mit jeweiligen Rotationsachsen 11 umfasst. Das oberste Lamellenelement 10 (bezogen auf die Bildebene) ist dabei im ausgebauten Zustand dargestellt.

Des Weiteren sind an der Schutzeinheit 9 angeordnete und vorspannbare Bewegungseinheiten 12 dargestellt, welche jeweils ausgelegt sind, die Schutzeinheit 9 von wenigstens einem offenen Positionszustand in einen verschlossenen Positionszustand zu überführen. Insofern ist die Auslöseeinheit 8 in einem eingebauten Zustand der Schutzvorrichtung 1 zwischen der Außenfenstereinheit 2 und der Rahmeneinheit 7 angeordnet dargestellt, sodass auf die Außenfenstereinheit 2 einwirkende mechanische Kräfte auf die Auslöseeinheit 8 zum Zwecke eines Auslösevorgangs an der wenigstens einen Bewegungseinheit 12 übertragbar sind.

Die Auslöseeinheit 8 ist dabei über insgesamt sechs Kopplungsbereiche 13 der Bewegungseinheiten 12 mit den Bewegungseinheiten 12 gekoppelt vorgesehen, wobei aufgrund der perspektivischen Darstellung nur die drei Vorderen dieser Kopplungsbereiche 13 in der Figur 1 zu erkennen sind.

Die Auslöseeinheit 8 weist insgesamt acht abstehende Kontaktelemente 14 auf, welche von jeweils vorgesehenen Vertiefungen der Rahmeneinheit 7 aufgenommen werden können, sodass diese jeweils drei von den Kontaktelemente 14 an jeweilige Seiten der Rahmeneinheit 7 mit dort vorgesehenen Kopplungsbereichen 13 in Berührung sind. Auf die Auslöseeinheit 8 einwirkende Kräfte in Richtung der Rahmeneinheit 7 können somit entsprechend über die Kopplungsbereiche 13 zum Zwecke eines Auslösevorgangs an die jeweiligen Bewegungseinheiten 12 übertragen werden.

Die Bewegungseinheiten 12 sind zudem mit einer ersten Übertragungseinheit 15 dargestellt. Diese erste Übertragungseinheit 15 ist dabei mehrteilig an der Schutzvorrichtung 1 angeordnet dargestellt, insbesondere an jeweiligen Rotationsachsen 11 von jeweiligen Lamellenelementen 10, sodass die sechs Lamellenelemente 10 gleichzeitig und parallel zueinander mittels der Bewegungseinheiten 12 und der wenigstens einen ersten Übertragungseinheit 15 bewegbar sind. Ein Rückseitenbereich der der Schutzvorrichtung 1 ist in dieser perspektivischen Ansicht verdeckt, wobei gleichermaßen auf dieser Rückseite ebenfalls eine Übertragungseinheit 15 vorgesehen sein kann, wie entsprechend der folgenden Figuren noch besser einzusehen ist. Bezogen auf die Bildebene ist das oberste Lamellenelement 10 losgelöst dargestellt, sodass neben diesem obersten Lamellenelement 10 Hebungselemente 16 der ersten Übertragungseinheit 15 frei erkennbar dargestellt sind.

Die Bewegungseinheiten 12 sind weiter mit insgesamt vier Federelementbaugruppen 17 mit jeweiligen Spannhalteelementen 18 dargestellt, wobei diese Komponenten 17, 18 in jeweiligen Kopplungsbereichen 13 angeordnet vorgesehen sind und aufgrund der perspektivischen Darstellung nur drei Federelementbaugruppen 17 und ein Spannhalteelement 18 in Figur 1 zu erkennen sind.

Jeweilige Federelementbaugruppen 17 umfassen dabei jeweils eine Torsionsfeder 19. In einem vorgespannten Zustand der Bewegungseinheiten 12 halten die jeweiligen Spannhalteelemente 18 die Torsionsfedern 19 der jeweiligen Federelementbaugruppen 17 in einem vorgespannten Zustand, in welchem die Schutzeinheit 9 entsprechend in einem offenen Positionszustand ist. Während eines normalen Ablaufs, in welchem keine äußeren mechanischen Kräfte auf die Außenfenstereinheit 2 und somit auch nicht auf die Auslöseeinheit 8 einwirken, befindet sich die Schutzvorrichtung 1 somit in einem vorgespannten Zustand. Dies ist gleichbedeutet mit jeweiligen nahezu waagrechten Positionen der Lamellenelementen 10 parallel zueinander (bezogen auf die Bildebene), sodass ein zumindest teilweiser freier Blick durch die Schutzeinheit 9 beziehungsweise anteilig durch die Schutzvorrichtung 1 möglich ist.

In dieser in Figur 1 dargestellten Ausführungsform ist die Auslöseeinheit 8 über die Kopplungsbereiche 13 der Bewegungseinheiten 12 mit den Bewegungseinheiten 12 gekoppelt, wobei die Auslöseeinheit 8 zudem mit einer zweiten Übertragungseinheit 20 dargestellt ist, sodass ein Auslösevorgang an den Bewegungseinheiten 12 an einem ersten Kopplungsbereich 13 mittels der Auslöseeinheit 8 und der zweiten Übertragungseinheit 20 im Wesentlichen gleichzeitig auch an wenigstens einem weiteren Kopplungsbereich 13 bewirkbar ist.

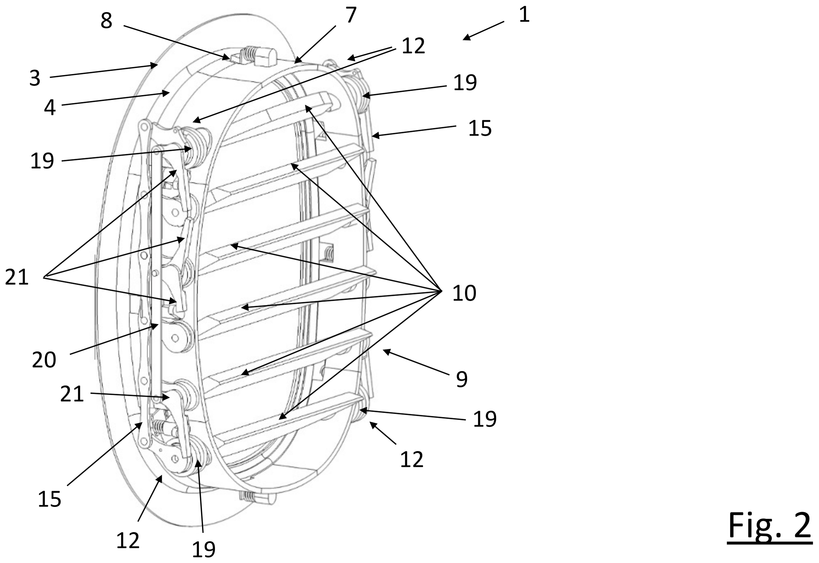

Aufgrund der perspektivischen Darstellung ist nur eine zweite Übertragungseinheit 20 zu erkennen. Sinngemäß ist auf der nicht einsehbaren Seite der Rahmeneinheit 7 eine weitere zweite Übertragungseinheit 20 vorgesehen, wie aus den folgenden Figuren 2 bis 4 noch klarer einzusehen ist.

Mit anderen Worten umfasst die Schutzvorrichtung 1 in dieser dargestellten Ausführungsvariante über zwei erste Übertragungseinheiten 15 und zwei zweite Übertragungseinheiten 20, wobei jeweilige Rotationsachsen 11 der wenigstens zwei Lamellenelemente 10 an ihren jeweiligen Enden sowohl mit einer ersten als auch mit einer zweiten Übertragungseinheit 15, 20 gekoppelt sind, sodass ein Auslösevorgang an den Bewegungseinheiten 12 auf einer ersten Seite der jeweiligen Rotationsachsen 11 im Wesentlichen gleichzeitig auch auf einer zweiten Seite der jeweiligen Rotationsachsen 11 bewirkbar ist.

Von dem obersten Lamellenelement 10 ist eine weitere Detailansicht ohne Lamellenelement 10 und lediglich mit der verbleibenden Rotationsachse 11 frei einsehbar dargestellt. An jeweiligen Seitenbereichen dieser Rotationsachse 11 sind Auslösefingerelemente 21 der jeweiligen zweiten Übertragungseinheiten 20 dargestellt, welche den oben beschriebenen Auslösemechanismus entsprechend an weiteren Kontaktbereichen 13 auslösen, sodass insgesamt eine nahezu gleichzeitige Auslösekraft aller vorhandenen vorgespannten Torsionsfedern 19 für einen besonders schnellen Schließmechanismus genutzt werden können. Dabei kann eine jeweilige Größe und Belastung einer jeweiligen Feder so vorgesehen sein, sodass beispielsweise eine Winkelbeschleunigung des Mechanismus erreicht werden kann, um etwa eine Schließzeit mit einem Wert zwischen 0,001 bis 0,005 Sekunden zu erreichen. Es ist in diesem Zusammenhang vorstellbar, dass alle vorgesehenen Torsionsfedern 19 zusammengenommen so zu dimensionieren sind, sodass sich dieser beschriebene Effekt bei einer nahezu gleichzeitigen Auslösung dieser Torsionsfedern 19 mit entsprechend schnellen Schließzeiten einstellt. Die jeweiligen Auslösefingerelemente 21 sind insofern in den jeweiligen Kopplungsbereichen 13 derart mit den jeweiligen Federelementbaugruppen 17 und den jeweiligen Spannhalteelement 18 gekoppelt, sodass ausgelöste Spannhalteelement 18 nicht nur zugehörige Torsionsfedern 19 lösen, sondern gleichzeitig mittels der zweiten Übertragungseinheit 20 weitere Torsionsfedern 19 auslösen. Im Fall einer mechanischen Belastung von außen auf die Außenfenstereinheit 2 werden die einwirkenden mechanischen Kräfte auf die Auslöseeinheit 8 übertragen, welche dann die auf wenigstens ein Spannhalteelement 18 drückt. Über die beiden Übertragungseinheiten 15, 20 wird entsprechend der erfindungsgemäße Mechanismus ausgelöst, wobei dann alle vorgespannten Bewegungseinheiten 12 nahezu in Echtzeit letztlich den Schließvorgang der Schutzeinheit 9 bewirken, sodass ein dahinterliegender Bereich in Richtung Kabineninnenraum schlagartig durch eine sich einstellende geschlossene Fläche vor den einwirkenden Kräften geschützt ist. Die jeweiligen Auslösefingerelemente 21 sind dabei rotierbar an der jeweiligen Rotationsachse 11 montiert vorgesehen, sodass die Übertragung wie zuvor beschrieben mit Vorteil bewirkbar ist. Unabhängig von der Stelle der äußeren mechanischen Einwirkung ist die ringförmige Auslöseeinheit 8 somit ausgelegt, jeweilige Übertragungswege zu bewirken, wobei die vorgestellte Schutzvorrichtung 1 mittels der beiden Übertragungseinheiten 15, 20 entsprechend eine Weiterleitung und somit eine nahezu gleichzeitige Auslösung der einzelnen Bewegungseinheiten 12 bewirkt. In einer nicht näher dargestellten Ausführungsvariante sind Schutzvorrichtungen 1 vorstellbar, die zusätzlich mittels elektromechanischer Baueinheiten und entsprechend gekoppelter Sensorsysteme bei den Auslösevorgängen und Schließvorgängen mit Vorteil unterstützbar sind, wobei die zugrunde liegende Erfindungsidee, nämlich die gesonderte Verortung der Auslöseeinheit 8, sinngemäß anzuwenden ist.

Die jeweiligen Lamellenelemente 10 können dabei ausgewählt sein aus: Lamellenelemente aus Metall, Lamellenelemente aus Aluminium, Lamellenelemente aus Metall mit einer Dicke zwischen 10 und 20 mm, vorzugsweise mit einer Dicke von 14 mm, Lamellenelemente aus Aluminium mit einer Dicke zwischen 10 und 20 mm, vorzugsweise mit einer Dicke von 14 mm.

In dem dargestellten Ausführungsbeispiel sind die Lamellenelemente 10 beispielsweise mit einer mittleren Dicke von 14 mm vorgesehen und weisen zudem eine geometrische Formgebung auf, sodass in einem geschlossenen Positionszustand der Schutzeinheit 9 eine zumindest teilweise Überlappung der Lamellenelemente 10 möglich ist, um einen bevorzugten geschlossenen und besonders sicheren Positionszustand zu bewirken.

In weiteren nicht näher dargestellten Ausführungsvarianten ist zudem vorstellbar, dass die Schutzvorrichtung 1 zumindest teilweise mit Sensorelementen und elektromagnetischen Bauelementen ausgestattet ist, sodass der zuvor erläuterte Auslösemechanismus auf vorteilhafte Weise zusätzlich unterstützbar ist. Beispielsweise können Sensorelemente zusätzlich dort vorgesehen sein, wo die Auslöseeinheit 8 in Berührung mit der Rahmeneinheit 7 vorgesehen ist, sodass diese Informationen für weitere Zwecke, beispielsweise für eine Aktivierung von elektromagnetischen Bauelementen, verwendet werden können. Die Schutzvorrichtung 1 kann für diese Zwecke eine Steuerungsbaugruppe oder dergleichen umfassen und die elektromagnetischen Bauelemente können etwa vorgesehen sein, um zusätzliche Beschleunigungen oder Auslösevorgänge an der zumindest einen Bewegungseinheit zu bewirken. Auch ist vorstellbar, dass derartige zusätzliche Bauelemente lediglich für Dokumentationszwecke oder dergleichen vorgesehen sind, um jeweilige Zustände der Schutzvorrichtung 1, beispielsweise in nahezu Echtzeit, zu dokumentieren. So kann diese Information beispielsweise einem Pilot zugespielt werden, sodass dieser dann über eine möglicherweise außergewöhnlichen Vorgang zeitnah informiert werden kann.

Fig. 2 zeigt eine schematische Perspektivansicht einer Schutzvorrichtung 1 für Flugzeugfenstereinheiten. Es handelt sich um die gleiche Schutzvorrichtung 1 wie sie bereits in Figur 1 beschrieben und näher erläutert ist, wobei die gleichen Bezugszeichen gelten, sodass diese an dieser Stelle nicht erneut eingeführt werden. Die Schutzvorrichtung 1 ist dabei in einem zusammengebauten und offenem Positionszustand dargestellt, sodass zumindest teilweise ein freier Blick durch die Schutzvorrichtung 1 möglich ist.

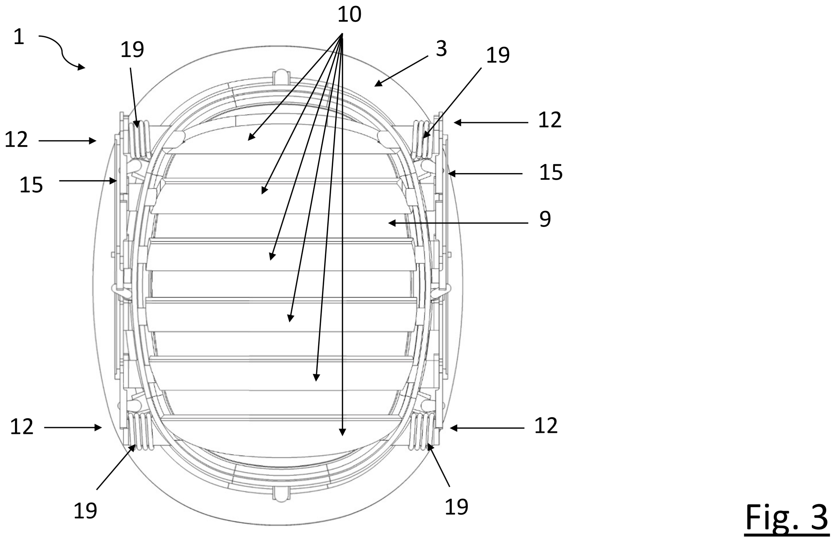

Fig. 3 zeigt eine schematische Draufsicht auf eine Schutzvorrichtung 1 für Flugzeugfenstereinheiten. Es handelt sich um die gleiche Schutzvorrichtung 1 wie sie bereits in Figur 1 beschrieben und näher erläutert ist, wobei die gleichen Bezugszeichen gelten, sodass diese an dieser Stelle nicht erneut eingeführt werden.

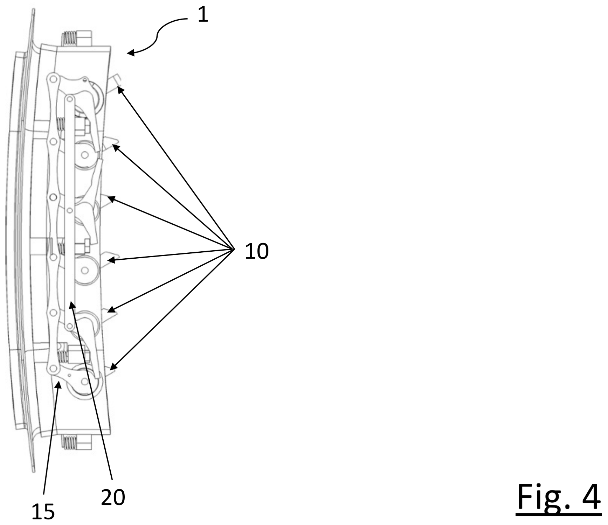

Fig. 4 zeigt eine schematische Seitenansicht einer Schutzvorrichtung 1 für Flugzeugfenstereinheiten. Es handelt sich um die gleiche Schutzvorrichtung 1 wie sie bereits in Figur 1 beschrieben und näher erläutert ist, wobei die gleichen Bezugszeichen gelten, sodass diese an dieser Stelle nicht erneut eingeführt werden.

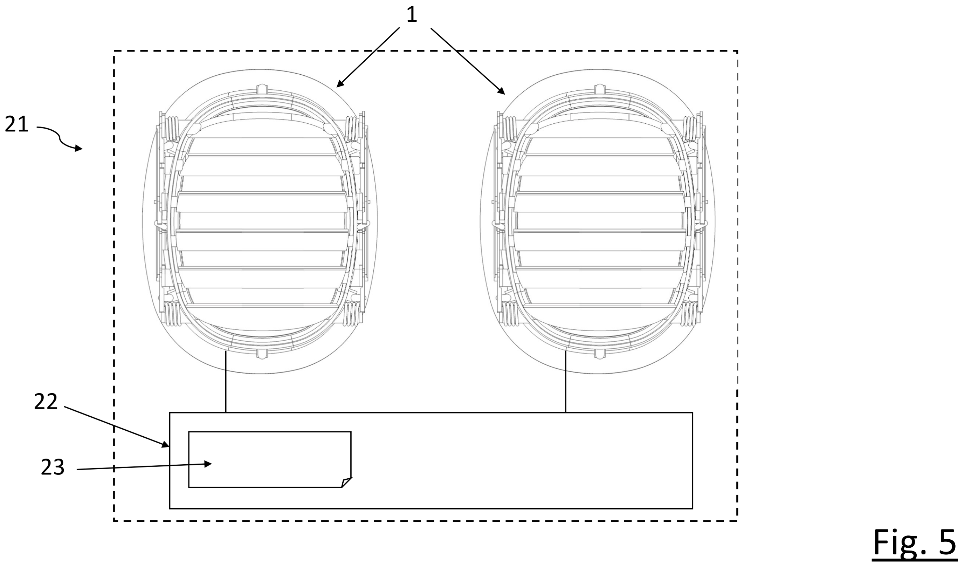

Fig. 5 zeigt eine schematische Ansicht eine schematische Ansicht eines Schutzvorrichtungssystem 22 für Flugzeuge. Dieses Schutzvorrichtungssystem 22 ist dabei mit zwei Schutzvorrichtungen 1 dargestellt, welche jeweils mit einer Steuerungseinheit 23 mit Steuerungsprogramm 24 gekoppelt vorgesehen sind. Die Steuerungseinheit 23 mit Steuerungsprogramm 24 ist dabei ausgelegt, jeweilige Auslösevorgänge an den wenigstens zwei Schutzvorrichtungen 1 zu detektieren und im Wesentlichen gleichzeitig einen Auslösevorgang an der jeweils anderen weiteren Schutzvorrichtung 1 zu bewirken. In nicht näher dargestellten Ausführungsvarianten können mehr als zwei Schutzvorrichtungen 1 vorgesehen sein. Auch ist vorstellbar, dass Auslösevorgänge in Abhängigkeit einer benutzerdefinierten räumlichen Nähe der wenigstens zwei Schutzvorrichtungen 1 zueinander bewirkbar sind. Wenn zum Beispiel ein Auslösevorgang an einer Schutzvorrichtung 1 ausgelöst wird, kann dies bei einer direkt benachbarten Schutzvorrichtung 1 ebenfalls zu einem Auslösevorgang führen, wobei dieser weitere Auslösevorgang mittels der Steuerungseinheit 23 mit Steuerungsprogramm 24 bewirkt wird. Dies kann mitunter eine schnellere Reaktion bedeuten, da nicht erst die weitere Auslöseeinheit von der direkt benachbarten Schutzvorrichtung 1 ausgelöst werden muss, um einen gewünschten Schutzmechanismus zu bewirken.

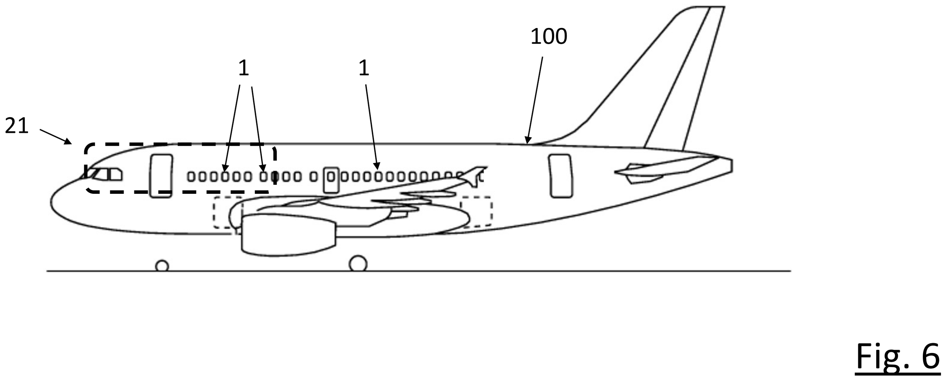

Fig. 6 zeigt eine schematische Ansicht eines erfindungsgemäßen Flugzeugs 100. Dieses Flugzeug 100 ist dabei sowohl mit einer separaten erfindungsgemäßen Schutzvorrichtung 1 als auch mit einem erfindungsgemäßen Schutzvorrichtungssystem 22 dargestellt, wobei das Schutzvorrichtungssystem 22 mit zwei erfindungsgemäßen Schutzvorrichtungen 1 vorgesehen ist.

### BEZUGSZEICHENLISTE

- 1: Schutzvorrichtung
- 2: Außenfenstereinheit
- 3: Fensterrahmen
- 4: Dichtelement
- 5: Außenscheibe
- 6: Innenscheibe
- 7: Rahmeneinheit
- 8: Auslöseeinheit
- 9: Schutzeinheit
- 10: Lamellenelement
- 11: Rotationsachse
- 12: Bewegungseinheit
- 13: Kopplungsbereich
- 14: Kontaktelement
- 15: erste Übertragungseinheit
- 16: Hebungselement
- 17: Federelementbaugruppe
- 18: Spannhalteelement
- 19: Torsionsfeder
- 20: zweite Übertragungseinheit
- 21: Auslösefingerelement
- 22: Schutzvorrichtungssystem
- 23: Steuerungseinheit
- 24: Steuerungsprogramm
- 100: Flugzeug

## Patentansprüche

1. Schutzvorrichtung (1) für Flugzeugfenstereinheiten umfassend eine Rahmeneinheit (7), eine in der Rahmeneinheit (7) angeordnete mehrteilige und verschließbare Schutzeinheit (9), wenigstens eine an der Schutzeinheit (9) angeordnete und vorspannbare Bewegungseinheit (12), welche ausgelegt ist, die Schutzeinheit (9) von wenigstens einem offenen Positionszustand in einen verschlossenen Positionszustand zu überführen, und eine über wenigstens einen Kopplungsbereich (13) der wenigstens einen Bewegungseinheit (12) mit der wenigstens einen Bewegungseinheit (12) gekoppelten Auslöseeinheit (8), **dadurch gekennzeichnet, dass** die Auslöseeinheit (8) in einem eingebauten Zustand der Schutzvorrichtung (1) in einer Flugzeugfenstereinheit zwischen einer Außenfenstereinheit (2) der Flugzeugfenstereinheit und der Rahmeneinheit (7) angeordnet ist, sodass auf die Außenfenstereinheit (2) einwirkende mechanische Kräfte auf die Auslöseeinheit (8) zum Zwecke eines Auslösevorgangs an der wenigstens einen Bewegungseinheit (12) übertragbar sind.

2. Schutzvorrichtung (1) nach Anspruch 1, wobei die Schutzeinheit (9) wenigstens zwei beweglich in der Rahmeneinheit (7) gelagerte Lamellenelemente (10) mit jeweiligen Rotationsachsen (11) umfasst.

3. Schutzvorrichtung (1) gemäß einem der vorherigen Ansprüche, wobei die wenigstens eine Bewegungseinheit (12) wenigstens eine in dem wenigstens einen Kopplungsbereich (13) angeordnete Federelementbaugruppe (17) mit Spannhalteelement (18) umfasst.

4. Schutzvorrichtung (1) gemäß einem der vorherigen Ansprüche 2 bis 3, wobei die wenigstens eine Bewegungseinheit (12) wenigstens eine erste Übertragungseinheit (15) umfasst, sodass die wenigstens zwei Lamellenelemente (10) gleichzeitig und parallel zueinander mittels der wenigstens einen Bewegungseinheit (12) und der wenigstens einen ersten Übertragungseinheit (15) bewegbar sind.

5. Schutzvorrichtung (1) gemäß einem der vorherigen Ansprüche, wobei die Auslöseeinheit (8) über wenigstens zwei Kopplungsbereiche (13) der wenigstens einen Bewegungseinheit (12) mit der wenigstens einen Bewegungseinheit (12) gekoppelt ist und die Auslöseeinheit (8) wenigstens eine zweite Übertragungseinheit (20) umfasst, sodass ein Auslösevorgang an der wenigstens einen Bewegungseinheit (12) an einem ersten Kopplungsbereich (13) mittels der Auslöseeinheit (8) und der wenigstens einen zweiten Übertragungseinheit (20) im Wesentlichen gleichzeitig auch an wenigstens einem weiteren Kopplungsbereich (13) bewirkbar ist.

6. Schutzvorrichtung (1) gemäß einem der vorherigen Ansprüche 2 bis 5, wobei die Schutzvorrichtung (1) wenigstens zwei erste Übertragungseinheiten (15) und wenigstens zwei zweite Übertragungseinheiten (20) umfasst, wobei jeweilige Rotationsachsen (11) der wenigstens zwei Lamellenelemente (10) an ihren jeweiligen Enden sowohl mit einer ersten als auch mit einer zweiten Übertragungseinheit (15, 20) gekoppelt sind, sodass ein Auslösevorgang an der wenigstens einen Bewegungseinheit (12) auf einer ersten Seite derjeweiligen Rotationsachsen (11) im Wesentlichen gleichzeitig auch auf einer zweiten Seite der jeweiligen Rotationsachsen (11) bewirkbar ist.

7. Schutzvorrichtung (1) gemäß einem der vorherigen Ansprüche 2 bis 6, wobei die wenigstens zwei Lamellenelemente (10) ausgewählt sind aus: Lamellenelemente aus Metall, Lamellenelemente aus Aluminium, Lamellenelemente aus Metall mit einer Dicke zwischen 10 und 20 mm, vorzugsweise mit einer Dicke von 14 mm, Lamellenelemente aus Aluminium mit einer Dicke zwischen 10 und 20 mm, vorzugsweise mit einer Dicke von 14 mm.

8. Schutzvorrichtungssystem (22) für Flugzeuge umfassend wenigstens zwei Schutzvorrichtungen (1) gemäß einem der Ansprüche 1 bis 7 und eine mit diesen wenigstens zwei Schutzvorrichtungen (1) gekoppelte Steuerungseinheit (23) mit Steuerungsprogramm (24), wobei die Steuerungseinheit (23) mit Steuerungsprogramm (24) ausgelegt ist, jeweilige Auslösevorgänge an den wenigstens zwei Schutzvorrichtungen (1) zu detektieren und im Wesentlichen gleichzeitig einen Auslösevorgang an der jeweils wenigstens einen weiteren Schutzvorrichtung (1) zu bewirken.

9. Schutzvorrichtungssystem (22) gemäß Anspruch 8, wobei der weitere Auslösevorgang in Abhängigkeit einer benutzerdefinierten räumlichen Nähe der wenigstens zwei Schutzvorrichtungen (1) zueinander bewirkbar ist.

10. Flugzeug (100) umfassend wenigstens eine Schutzvorrichtung (1) gemäß einem der Ansprüche 1 bis 7 oder ein Schutzvorrichtungssystem (21) gemäß einem der Ansprüche 8 bis 9.
